# EUROPEAN PATENT SPECIFICATION

(11) **EP 0 898 842 B1**
(45) Date of publication and mention of the grant of the patent: **23.01.2008**
(21) Application number: 97924051.2
(22) Date of filing: 30.05.1997
(51) Int. Cl.: H04Q 3/00, H04M 3/42

(54) **AN ARRANGEMENT AND A METHOD FOR MAKING A TELEPHONE CALL**
VORRICHTUNG UND VERFAHREN ZUM HERSTELLEN EINES FERNSPRECHANRUF
SYSTEME ET PROCEDE POUR EFFECTUER UN APPEL TELEPHONIQUE

(30) Priority: 31.05.1996 FI 962282
(43) Date of publication of application: 03.03.1999
(73) Proprietor: TELEFONAKTIEBOLAGET LM ERICSSON (publ), 164 83 Stockholm (SE)
(72) Inventor: AHOLA, Kalevi, FIN-02400 Kirkkonummi (FI)
(74) Representative: Kärkkäinen, Veli-Matti
(86) International application number: PCT/FI1997/000336
(87) International publication number: WO 1997/046031

(56) References cited:
- WO-A-96/08909
- WO-A-96/15633
- US-A- 5 418 844
- US-A- 5 436 957

## Description

### Field of the Invention

The invention relates to an arrangement and to a method for making a telephone call.

### Background of the invention

A requirement to support and to produce various services has taken the development of communications networks towards so called intelligent network (IN). An intelligent network may be defined as an architecture which can be applied to the most of the communications networks regardless the used network technology. The object thereof is to create, control and manage teleservices providing surplus value. One special feature of the intelligent network is to provide modular operations which are independent from the used service and which can be attached to each other as components when creating new services, whereby the definition and designing of new services will become easier. A further special feature is that the provision of the services is independent from the telecommunications network. The services are separated from the physical network structure which is disposed at the lowest level, and thus it is possible to distribute them.

CCITT (International Telegraph and Telephone Consultative Committee) has defined so called Intelligent Network Conseptual Model (INCM) of an intelligent network in the recommendation CS-1 (Capability Set 1). The model consists of four levels, each of them presenting an abstract view of the possibilities provided by the intelligent network. The second highest level of the model is a global functional plane and it includes a view of the intelligent network as service independent building blocks (SIBs) from which the desired properties of services and services are gathered by means of a service logic. This level contains also a basic call process (BCP) covering the entire network as well as a point of initiation (POI) and a point of return (POR) between the BCP and the SIBs.

A basic call state model (BCSM) defined in connection with the IN network is a description of the functions of the call control function needed for the build up and maintenance of the connection route between the users. It recognises those points (detection points) in the call and connection process in which the IN service logic objects may be in an interactive relation with the basic call and the connection management features. It provides a structure for the description of those basic call and connection events which may lead into an activation of the IN service logic object, and for the description of those points in which the transfer of the control may happen.

An example of the intelligent network services is so called AAB service (Automatic Alternative Billing). This enables the user to make a call from any telephone, wherein the charging will be debited from the account of the user, said account being maintained by the operator, and the billing will be accomplished later. The service provider will designate the service user with an identifying account code and a personal identification number (PIN). The service will be started as the user selects an access code which is followed by the number to which the user wishes to make the call. The SSP recognises the access code and transfers the control to the SCP. The SCP requests the user to give the identification code and the PIN number. The code and PIN number given by the user are then verified by performing a database inquiry, whereafter the call is connected. The bill for the call will be proceeded afterwards in accordance with the pulses generated by the exchange and indicating the length of the call and the charging information given by the SCP.

Firstly, it is characteristic for the present telephone systems that different databases are used and secondly that the call and the subscriber specific computations are accomplished afterwards. In a fixed network it is known to use a subscriber database of an exchange and in mobile telephone network, such as is a GSM network, a home location register (HLR) in which the permanent subscriber data has been stored. In the above mentioned AAB service an intelligent network database is used, which includes the identification code and the PIN number.

It is common to all of these subscriber databases that they are created and updated by the operator of the network in question. It is known to allocate various subscriber related parameters to the database. Thus it is, for instance, possible for the network operator to allocate a parameter to the subscriber file which prevents the subscriber to make, for instance, international calls or to access certain services provided by means of the intelligent network, such as entertainment services. The price level of the blocked call is usually high. Especially the expensive entertainment services realized by an intelligent network have proven to be problematic, and thus it has already been possible to set therein a certain time limit after which the call will be switched off.

### Summary of the invention

In view of the above, there are some problems related to the management of the subscriber data of the present networks. The only way is to totally prevent an access to numbers beginning with a certain prefix. WO9615633 describes how it is possible to obtain real time information, eg. price and statistical data, about the calls of an subscriber during a telephone call. Thus it is possible to control the calls of a so called problem subscriber during a call. The time limit realized in the intelligent networks and allocated to entertainment services relates to one single call, and concerns thus all calls made to the entertainment telephone number, and will thus not prevent the same subscriber from calling time after time to the same service, since the subscriber and telephone subscription specific monitoring has not been hitherto possible.

Telephone cards exist which can be bought and which include a certain amount of calling time. These are sensitive for abuse. It is always possible to call with these if there is any balance left. They do not, however, include such a feature that they would allow a call to a certain number space only. The holder of the card has to dial all numbers of the desired called party. Especially tourists who are in a foreign country are often facing the problem that they do not know the number required to be able to call eg. the homeland. It is possible to break into a smart card provided with a magnetic strip, ie. it is possible to program calling time into it such that the operator will not be aware of that. The sellers and distributors of the telephone cards may misuse the freely visible PIN and the password or the number of the magnetic strip. A card made from a board breaks, whereafter said PIN (=Personal Identity Number) and password information will become destroyed. The card telephone booths require special equipment for the reading of the magnetic strip and are expensive when compared to an IN booth which requires only an telephone headset and a keyset.

It is an object of the invention to overcome the above disadvantages.

According to the present invention, in a method for making a telephone call by a terminal, a desired predefined service number is announced to an exchange, in which the number is then identified and the call is connected to an intelligent network. A predefined personal identification number and password are announced in accordance with the instructions of the intelligent network and a right of use is verified in the intelligent network. According to the invention the user is provided with an access to a certain predefined number space, and a number operating in the desired number space is selected in the telephone of the user, wherein the prefix of said number is converted under a control by the intelligent network to enable the access to the number space, to route the call in the intelligent network to a predefined number space, and the call is routed in the intelligent network to the desired telephone number in a manner indicated by the converted number.

In an arrangement for making a telephone call by a terminal a predefined service number routing the call to an intelligent network service is announced to an exchange from the terminal, a call is connected from the exchange to the intelligent network, the terminal is used to announce a predefined personal identification number, and a password to the intelligent network in accordance with the instruction given by the intelligent network and the intelligent network is arranged to verify the announced numbers. In additon, a predefined number space is defined by the service, the arrangement being such that the user has an access to a certain predefined number space dedicated to the announced predefined service number, the service enabling the user to select from the terminal a number operating in the predefined number space defined by the service. The intelligent network is arranged to convert the number such that the access into the number space defined by the service is enabled, whereafter the converted number is used in the arrangement to route the call into the number operating in the predefined number space.

The invention enables especially calls which are directed to a certain area or to a certain number group or even to a certain number from any digital telephone subscription. Usually the location of the caller is limited into the operation area of the operator. The invention provides a possibility for wider free competition between various telecommunication companies whereby the situation of the consumer will be improved. The invention provides especially a possibility to establish a connection from a foreign country to a certain country or certain telecommunications network, or directory area, in a simple manner. When a user uses the card according to the invention the user can be sure that he/she is the first one using said card.

### Brief description of the drawings

In the following the invention will be described with reference to the annexed drawing, in which
Figure 1 discloses a physical architecture of an intelligent network.
Figure 2 illustrates a number conversion service of an intelligent network,
Figure 3 illustrates the operation of an intelligent network in a system according to the present invention,
Figure 4 illustrates a flow chart of how the operation according to the present invention is incorporated into the monitoring of the caller related computations, and
Figure 5 discloses as a flow chart the events during a call.

### A detailed description of the drawings

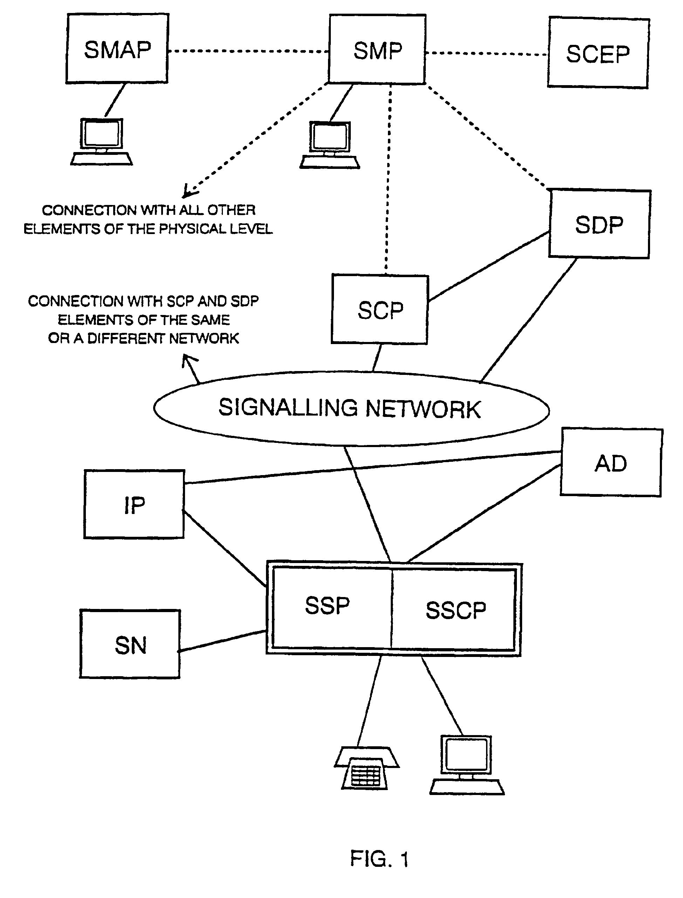

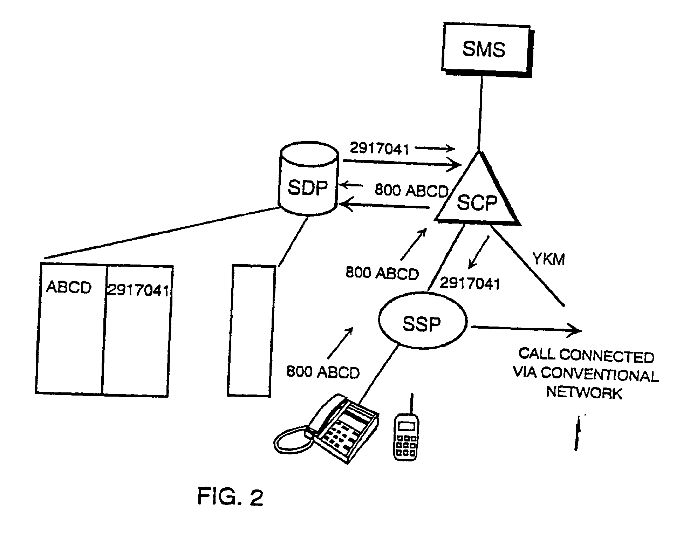

A physical architecture of the intelligent network is shown in figure 1. The service switching point SSP provides the user with an access path into the network and handles all necessary selection operations. It is capable of detecting the service requests of the intelligent network. Operationally, the SSP includes the call management and service selection functions. The service control point (SCP) includes those service logic programs which are used to produce the services of the intelligent network. A service data point (SDP) includes data which is used by the service logic programs for producing individual services. The SCP and/or SMP may use the services of the SDP either directly or through a signal network using INAP protocol (an application protocol of the intelligent network according to an OSI model (Open Systems Interconnection) and belonging to the layer 7, ie. an application level communication protocol for the message transfer between the different nodes (SSP/SCP) of the intelligent network). The additional services provided by an intelligent peripheral (IP) are, for example, voice mails, synthetic voice and speech recognition apparatuses and voice generation. A service switching and control point (SSCP) consists of the SCP and the SSP in a single node. A service management point (SMP) accomplishes the control of the service management, provision and operation, and it can become connected to all of the other physical objects. Operational examples are the management of the database, monitoring and testing of the network, management of the network traffic and collecting of network data. A service creation environment point (SCEP) is used to define, develop and test the services of the intelligent network and to supply the service to the SMP. An adjunct AD operationally corresponds to the service control point SCP, but is connected directly to the SSP. A service node (SN) may control the services of the intelligent network and perform data transfer with the users. It communicates directly with one or several of the SSPs. A service management access point (SMAP) is a physical object which provides certain users with a connection to the SMP. Operationally the SSP corresponds to a service switching function (SSF) which links a call control function (CCF) and a service control function (SCF). It allows the SCF to control the CCF. When a subscriber, whose calls are desired to be controlled, makes a call, the A number and also the B number of the subscriber are directed to the intelligent network at least in such case when a number conversion is made to it in the intelligent network (compare to figure 2). If the call is a call using an intelligent network service, eg. a call to an entertainment service, the SCP will return routing instructions and charging information to the exchange. When the call has been routed to the B subscriber and the speech connection becomes connected, pulses are generated in a pulse generator. In other systems the telephone exchange calculates the costs of the call afterwards on grounds of the pulses generated during the call and the charging information. In some other systems calculating pulses generated during the call are transferred to the service control point SCP in a manner defined by a monitoring request transmitted by the service control function SCF. The monitoring requests are responded by a service switching function (SSF). The SCP calculates in real time and on grounds of the pulses and the charging information the price of the call as the call proceeds. The SCP has retrieved the subscriber data from a subscriber file database of the subscriber, and if it includes data relating to the price of the call, for instance data about how much the call may cost at most or whether there is any balance left or not, the call will be switched off or proceeded in some other possible and controlled manner.

Figure 2 discloses one known basic service in the intelligent network, namely a number conversion service. Only the essential physical objects are shown in the figure. A subscriber dials eg. number 800+ABCD (ABCD being any number sequence). An service control function of an exchange will identify from the 800 prefix that it is an intelligent network call in question, and thus an intelligent network service is requested through an intelligent network switching point SSP. It sends, using the common channel signalling, an inquiry to the control point SCP which includes the number 800+ABCD. A corresponding service program within the SCP reviews from the SDP file which is the number in an ordinary telephone network which corresponds the number 800+ABCD. In this example it is number 291 7041. The SCP returns this number to the SSP which transfers it further to the call control of the exchange, which will then route the call to this number. When the SCP is transferring the number to the SSP, it will also transfer the charging information concerning the call. As the exchange generates pulses during the call, the call charging will be accomplished later on grounds of these pulses and the charging information given by the SCP. It is known that C number in general means that number which is provided by the number conversion, which the service of the intelligent network has received from the database. In this case the A number is the number of the calling subscriber, the B number is the number dialled by the calling subscriber and including the personal identification of the B subscriber, and the C number is then that real number retrieved from the database to which the call has to be routed.

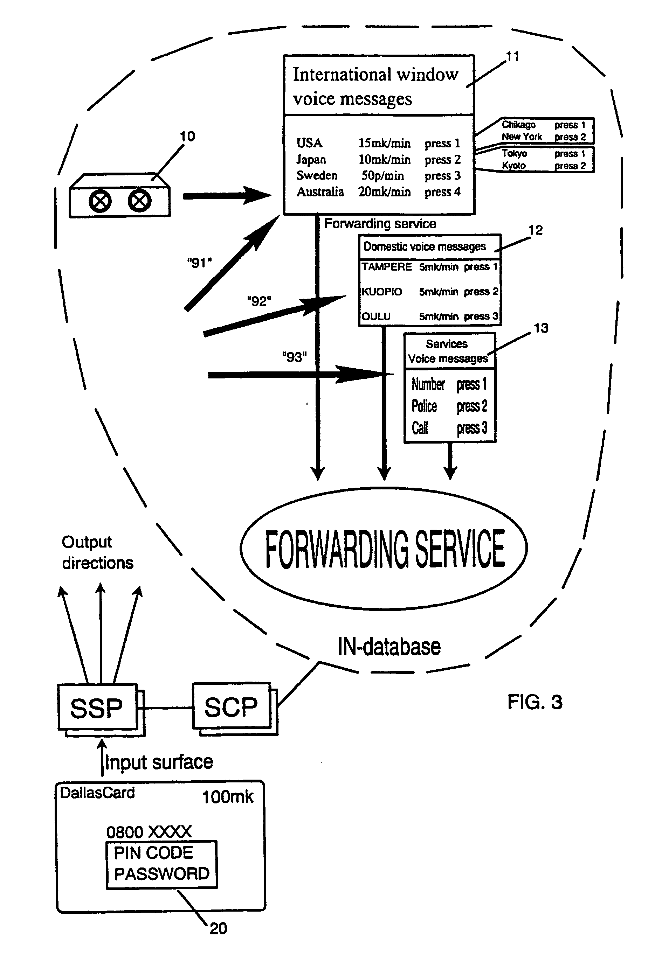

In figure 3 an incoming call from a telecommunications network comes into an input surface of a SSP. The number in the telecommunications network, to which the call has been made, is eg. 0800 XXXX as shown on the card. The card is prepaid. A card identification (PIN, a personal identification number) and a password thereof may be written on the top of the card. The password is covered by an erasable coverage 20 (scraping surface, such as in the lottery tickets provided with an erasable cover surface), so that the user can be sure that the card is feasible and that it has not been previously used. When the number given by the user has been transferred to the SSP or similar and to the SCP and to the database of the intelligent network, the intelligent network requests desired data from the user, such as the identification number and the password. When these match and the user still has some connection time left, he/she may continue. The card may be bound to one area or one service, ie. it is possible to establish a call only to eg. a certain telecommunications area or directory area or service number without using an additional prefix, or using a shorter prefix than usual, when the user would call from a corresponding telephone. Figure 3 discloses such a service in which the same card (identification number) has an access to several different services or telecommunications areas (countries), directory areas (cities) or services (weather forecast, time service etc.) or also to a mobile network. When the user has received an information that it is possible to establish a call by using his/hers identification number, he/she may choose eg. "91", "92" or "93". The user may receive a voice message about those possibilities which relate to this number and instructions how to continue the call by using the IP. When the user has dialled for instance "91" and then presses the key "1", he/she may initiate the call by giving eg. an area code - a telephone number without the routing number for the target country. The country code is attached in the intelligent network ahead the number the user did dial in. A request is sent to the SCP by using a common channel signalling. A corresponding service program in the SCP verifies from the SDP file the number which has to be attached prior to the dialled number 121212. It might be number 1. The SCP returns the converted number 1121212 back to the SSP, which further sends it to the service control of the exchange, which then routes the call to this number. When giving the number to the SSP the SCP also gives the charging information concerning the call. Thus it is possible to know how much calling time a user identified by a certain identification does have. Thereafter the call is established in accordance with the normal call establishment practice. In case the called number does not answer, the user may call again or just simply stop calling. When the user has pressed "91" and "1" he/she may be provided with a possibility to choose some areas or cities within the USA, wherein the SCP is containing the necessary information about the numbers allowing an access to that area. Thus it is possible for the user to continue the search of an identification allowing an access to the area from the SDP, if he/she desires to do so. When the searched information has been found the user may dial the number of the subscription in that area in a similar manner as if he/she would be located in that area. In figure 3 the tape recorder has been designated by numeral 10, windows by 11,12,13, said windows including table data of the desired target area into which the access is enabled by the service number and the appropriate numbers. Number 14 corresponds the caller, and 15 the forwarding service provider or similar.

If the user has dialled "92" he/she may be connected by means of a voice message to a certain city, eg. Tampere, if he/she presses "1". In accordance with this information the user then dials directly the desired number in Tampere without any additional directory area numbers. The invention provides the user with a possibility to act as a caller of so called "local call" without any need to remember the actual directory area code. The third case in figure 3 is that the user dials "93" whereafter he/she becomes connected to voice messages, eg. by pressing "1", available for the user identification (eg. a service number for a weather forecast). Fourth case is that the user dials eg. code "94", whereafter he/she is virtually transferred in advance to an environment which is dependent of the number. If the user is eg. originating from London but physically located in Finland, he/she may call to London by selecting a local telephone number just as he/she would be in London and the IN will incorporate the long distance level prefix and the country code as well as the directory area code for London into the call (94 directs the paging into the table of the IN, from which the prefixes from Finland to London are selected). However, if the user wishes to make a call to eg. Sweden, he/she chooses an international prefix as if he/she would be in London and then the country code and the directory area code and the telephone number. The IN modifies this number by replacing the right prefix prior to the number, whereafter the call can be normally connected. The IN includes a table which has the prefixes and the prefixes corresponding to them to be joined to the corresponding numbers. If this user wishes to make a call to Finland, he/she can use the international prefix as in London, and then the country code and the directory area code. The IN modifies this number by removing the international prefix and the country code. If this call is a local call in Finland, the IN will also remove the directory area code, but if the call is directed to another telecommunications area, the In will add the long distance level prefix therein and the call will become connected normally. It is, however, desirable that the subscriber can call the local calls without a need to select this long number sequence in the entirety thereof by using another service number or by using a special code after the service number "94".

Alternatively, the card or the user may have an identification number and a password which allow an access to one single location, area, directory area etc. only. Eg. after giving the required PIN code and the password the caller receives a notification by means of which the target country, and more precisely eg. the city and the instructions for the selection, are announced. After the right of use has been verified the user dials the desired telephone number subsequent to either a voice message or similar. The dialled number is directed to the intelligent network or the SDP, which includes the files about the destinations which are accessed by dialling the numbers 0800-XXXX (X=integer 0-9). 0800 is the number designating the service by means of which the exchange is able to route the call to the network switching point, XXXX is any arbitrary number, which in connection with 0800 number or similar identifies the target service. 0800-2122 may correspond to prefixes 990-46-8, by means of which it is possible to access Stockholm from Finland. 0800-3133 may correspond to YY-358-21, by means of which it is possible to access Finland from abroad (YY is the code which has to be given for the international calls from any country). For example, by number 0800-1234 it is possible to access a file which converts the dialled number 212121 to number 931212121 (directory area number - subscriber number) corresponding to the C number. The converted number is returned by the network management system SCP to the SSP which routes the call ahead or instructs the telephone exchange to direct the call establishment in a normal manner into the converted number. Usually the prefix is retrieved from the SDP, after which the user chooses a target number he/she desires to access. It is possible add a country and/or directory area code (area number) in question prior to the B number. As the calling time starts to get close to the run out thereof, the caller is notified about the running out of the time. Other messages can be added in accordance with each application as well as messages of the possibility of renewing the card or reloading of additional calling time. The possibility of buying additional calling time is provided such that either the telephone company, a financial institution or any outlet of the cards is provided with a possibility of a remote operating of the IN, by means of which it is possible to pay additional calling time to the account of the card in question. It is also possible to allow a possible additional payment through a dialling by the subscriber, if a credit limit is defined for said card in question. The prices of the cards may vary depending on the target numbers of the cards. The sales of the cards might occur in any outlet, shop, kiosk etc. Other known distribution channels can also be utilized instead of the cards. It is eg. possible to protect an ordinary fixed telephone subscription from misuse. A certain identifier or password is required prior the telephone is used to be able to use it when eg. the user wishes to access services having a price which exceeds a certain limit, such as when making calls from the subscribers subscription outside the network area or abroad. These cases use also such function of the intelligent network, by means of which the telephone number is converted to the numbers of certain area or service.

The invention uses a keypad selection operation according to the present DTFM (Dual Tone Multi-Frequency) signalling standard, by which the IN operation is activated. The invention is not limited to this solution only, but also other corresponding solutions for transferring sound or dialling can be utilized. However, the invention is not dependent from the IN type apparatus.

When the idea of the cards is applied within a national area, eg. within a certain telecommunications area, it is also possible to use it as a card for different services or entertainment calls. Thus the service telephones liable for charges could be connected such that eg. only a certain identification allows an access to the service. It is also possible to limit the group of the callers to certain ones, when it is desired that only the identification of the card holder is enabled for making a call. An example of such are the dormitories in which the card holders would be the only ones to be able to make calls of certain areas or services.

In the above cases a HOT-line, which is a trade mark of Ericsson, is a mode by means of which the telephone will automatically connect itself after a certain time to a certain number, such as to an IN service number, subsequent to the lifting off of the headset or otherwise switching on the telephone. After having accessed the IN service according to the above described, it is possible to continue the call operations according to the present inventions after the PIN and the password has been fed in. This enables, for instance, telephones in holiday homes and similar places in which the subscription does not have a proper owner to whom it would be possible to sent a bill afterwards. All normal calls require a telephone card in which the payment has been already prepaid or that the card has credit on it. An exception of this are, of course, emergency calls, such as 112 (in Finland), and similar, which are always accessible without any card. This improves the safety of the consumer since it enables a telephone at locations in which a common public telephone is usually used centrally in one area.

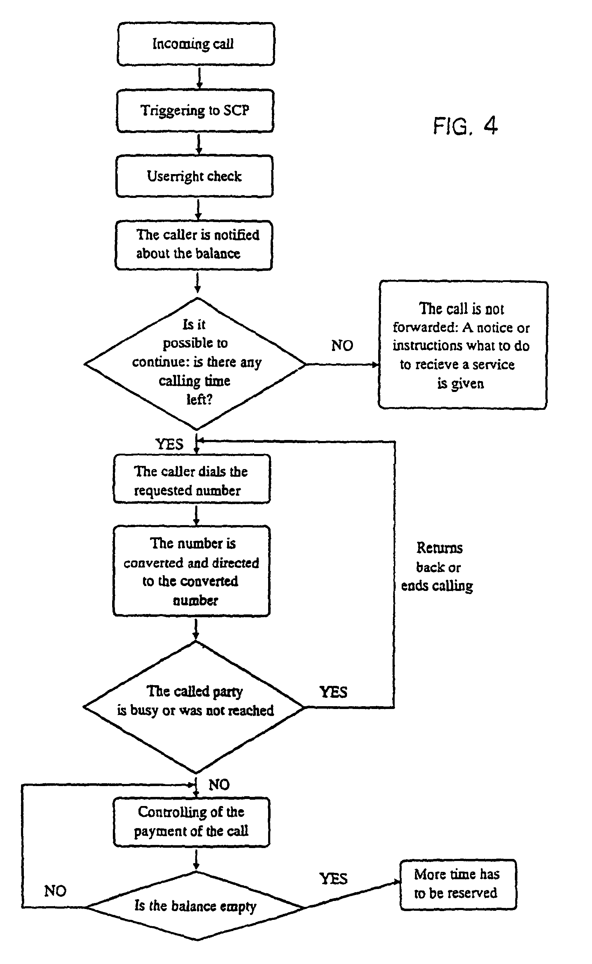

Figure 4 discloses how it is possible to use the solution according to the invention to form a part of the monitoring of the payment of the call. When a call is made to the above mentioned number, the call is connected to the SCP, in which the user's right to use the service is verified. The user may be provided with an information about the remaining balance. If there is some balance left, the call will be continued, and if not, an announcement how to act will be given. When a service is in use the user selects the desired number which will be converted into a form which the exchange can direct into the desired area. If the called party is busy or cannot be reached, the call will be ended or a new possibility for a call will be provided. After the call has been answered the balance of the user will be monitored and when the balance runs out, the call will be interrupted, and a notice will be given of the possibility to load some additional time. The management logic in the service control point SCP will be formed immediately into the user database. During the call, the calculating pulses generated by the telephone exchange are delivered to the intelligent network of the service in a manner defined by a monitoring request transmitted by the service control function SCF, wherein said IN computes the costs of the call during the call on grounds of the charging information given by the calculating pulses and the control point SCP, whereby the momentary cost of the call becomes known in real time.

The method and arrangement according to the invention enables several applications. It can be used when controlling prepaid calls, to which calls restrictive rules or other services may possible be related. In relation to specific calls it is possible to limit the duration of one single call on the basis of the charges thereof. A subscriber related call control can also be easily realized. It is for instance easy to restrict the total number of the calls the subscriber is allowed to make. It is possible to automatically register the subscriber to the subscriber database on the behalf of the telecommunications network and the registration can be implemented such that the subscriber does not even note it. This allows the control of eg. the traffic of the GSM visitor subscribers such that they cannot cause credit losses to the operators. The calls of so called problem subscribers can be easily controlled and real time information can be obtained from them, and thus it is possible to initiate the necessary actions in time in respect of the subscriber concerned.

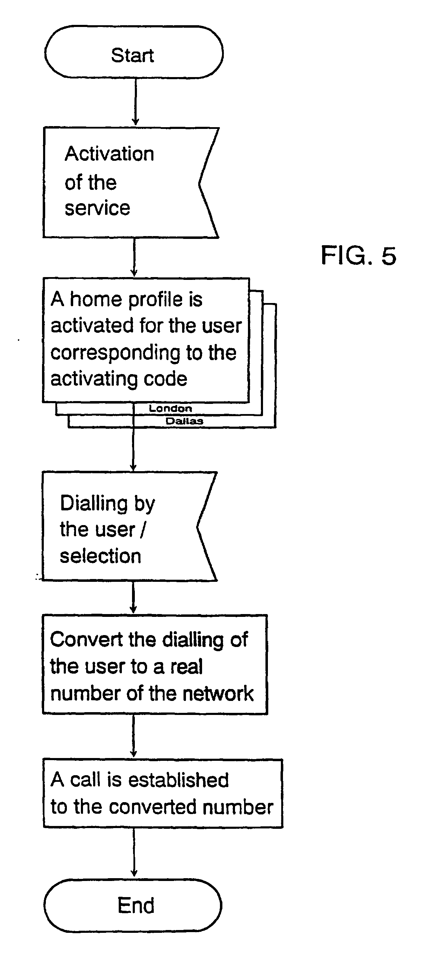

Figure 5 discloses a flow chart of the solution according to the invention in accordance with the progress of the call. The service is activated when calling to a certain number and a home profile is activated for the user, said profile corresponding the activating code, eg. Dallas, London. When the user has dialled in the desired target number, eg. from London, the intelligent network converts the dialled number such that it becomes provided with a prefix in accordance with a register in the intelligent network such that the user may even not notice it. Thereafter the call is routed and established to the destination in question.

The above description and the annexed figures are only intended to illustrate the present invention. Various variations and modifications of the invention will become clear for the skilled person.

## Claims

1. A method of making a telephone call by a terminal, wherein
a user announces a predefined service number to an exchange, the announced service number is identified in the exchange and the call is connected to an intelligent network,
the user has an item having a scraping surface like, for instance, a prepaid card, so that identification entitling the use of the service is scraped visible from below of the scraping surface, whereafter said identification is announced to the intelligent network in accordance with instructions given by the intelligent network,
whereafter right of use is verified in the intelligent network,
**characterized in that**
the user is provided with an access to a certain predefined number space by announcing the predefined service number to the exchange,
a telephone number operating in the predefined number space is selected by the user,
said selected telephone number is converted under a control by the intelligent network to enable the access to the predefined number space,
the call is routed in the intelligent network to the desired telephone number in a manner indicated by the converted number.

2. A method according to claim 1, **characterized in that** the number space corresponds to an area restricted by a country or a directory area.

3. A method according to claim 1, **characterized in that** the number space comprises a set of service numbers.

4. A method according to any of claims 1 to 3, **characterized in that** a target area, preferably e.g. a directory area, is selected, whereafter the operation within the directory area is similar to the operation of a subscriber **in that** directory area.

5. A method according to claim 1 for managing subscriber information in a telephone network having a telephone exchange of the network to which a service switching point SSP of the intelligent network is connected to, the SSP providing an access from the telephone network to the services offered by a service control point SCP of the intelligent network, wherein a service data point SDP related to the service control point SCP comprises a database of the subscribers to be managed, an individual subscriber record of the database including at least a subscriber identification and other subscriber data concerning the subscriber, and the data of the database being usable for a real time control of the calls of the user after the service switching point SSP has directed a new call accomplished by the managed subscriber into the intelligent network, wherein the number dialled in by the user is converted to a number of the desired number space and the call is routed to a number defined by said space concerned.

6. A method according to claim 5, **characterized in that** a management logic of the subscriber data in the service control point SCP is formed immediately into the database, calculating pulses generated by the telephone exchange are forwarded during the call into the intelligent network in a manner defined by a monitoring request sent by a service control function SCF, a charge for the call is calculated in the intelligent network during the call on grounds of the calculating pulses and the call charging information provided by the control point SCP, whereby the momentary charge for the call is known in real time.

7. A method according to any one of the claims 1 to 6, **characterized in that** after the user has accessed the certain predefined number space a number operating in the desired number space is selected from the telephone of the user, to which number a prefix is added under control of the intelligent network to enable the access into the number space, to route the call into a subscription disclosed by the prefix added in the intelligent network and the number.

8. A method according to any one of the claims 1 to 6, **characterized in that** after the user has accessed the certain predefined number space, a number operating in the desired number space in selected from the telephone of the user, from which number a prefix is removed under control of the intelligent network to enable the access into the number space and a prefix is either added or not added therein, to route the call into a subscription disclosed by the prefix added in the intelligent network and/or the number.

9. An intelligent network system for routing a telephone call, wherein the system comprises:
means for connecting to a call routed to the intelligent network system from an exchange, wherein the routing of the call to the intelligent network system is indicated by announcing a predefined service number from a terminal to the exchange,
means for receiving an identification and a password entitling use of an intelligent network service from the terminal, wherein a user of the terminal has an item, such as a prepaid card, having a scraping surface (20) such that said identification is scraped visible from below the scraping surface, and wherein said means are arranged to instruct on announcement of said identification and said password from the terminal,
**characterized in that** the intelligent network system further comprises:
means (11, 12, 13) for defining at least one number space and associating the predefined service number to a certain predefined number space such that the user has access to the predefined number space associated with the predefined service number,
means for receiving from the terminal a number operating in said predefined number space, wherein the number is selected by the user by means of the the terminal,
means for converting the number to produce a converted number such that access to the predefined number space is enabled, whereafter the converted number is used to route the call to the number operating in said predefined number space.

10. An intelligent network system according to claim 9, **characterized in that** the user receives the predefined service number by means of a prepaid calling card.

## Patentansprüche

1. Ein Verfahren zum Ausführen eines Telefonanrufs durch ein Endgerät, wobei
ein Benutzer einer Durchgangsvermittlungsstelle eine vorbestimmte Dienstnummer ankündigt, die angekündigte Dienstnummer in der Durchgangsvermittlungsstelle identifiziert wird und der Anruf mit einem intelligenten Netzwerk verbunden wird,
der Benutzer einen Gegenstand mit einer Abschaboberfläche besitzt, wie beispielsweise eine Guthaben- bzw. Prepaidkarte, so dass eine zur Benutzung des Dienstes berechtigende Identifizierung von der Unterseite der Abschaboberfläche her sichtbar abgeschabt wird, wonach die Identifizierung dem intelligenten Netzwerk gemäß von dem intelligenten Netzwerk angegebenen Anweisungen angekündigt wird,
wonach das Benutzungsrecht in dem intelligenten Netzwerk überprüft wird,
**dadurch gekennzeichnet, dass**
dem Benutzer ein Zugriff zu einem bestimmten, vordefinierten Nummernraum verliehen wird, indem der Durchgangsvermittlungsstelle die vordefinierte Dienstnummer angekündigt wird,
eine in dem vordefinierten Nummernraum in Betrieb befindliche Telefonnummer von dem Benutzer ausgewählt wird,
die ausgewählte Telefonnummer unter einer Steuerung durch das intelligente Netzwerk umgewandelt wird, um den Zugang zu dem vorbestimmten Nummernraum zu ermöglichen,
der Anruf in dem intelligenten Netzwerk in einer durch die umgewandelte Nummer angedeuteten Art und Weise zu dem gewünschten Telefonnummernraum geleitet wird.

2. Ein Verfahren nach Anspruch 1, **dadurch gekennzeichnet, dass** der Nummernraum einem durch ein Land oder einen Telefonbuchbezirk begrenzten Gebiet entspricht.

3. Ein Verfahren nach Anspruch 1, **dadurch gekennzeichnet, dass** der Nummernraum einen Satz von Dienst- bzw. Servicenummern umfasst.

4. Ein Verfahren nach einem der Ansprüche 1 bis 3, **dadurch gekennzeichnet, dass** ein Zielgebiet, vorzugsweise beispielsweise ein Telefonbuchbezirk, ausgewählt wird, wonach der Betrieb innerhalb des Telefonbuchbezirks vergleichbar ist mit dem Betrieb eines Teilnehmers in diesem Telefonbuchbezirk.

5. Ein Verfahren nach Anspruch 1 zum Verwalten von Teilnehmerinformation in einem Telefonnetzwerk, das eine Telefonvermittlungsstelle des Netzwerks aufweist, mit der ein Diensteinschaltpunkt SSP (Englisch: Service Switching Point) des intelligenten Netzwerks verbunden ist, wobei der SSP einen Zugang aus dem Telefonnetzwerk zu den von einem Dienstkontrollpunkt SCP (Englisch: Service Control Point) des intelligenten Netzwerks angebotenen Diensten bereit gestellt wird, wobei ein mit dem Dienstkontrollpunkt SCP in Bezug stehender Dienstdatenpunkt SDP (Englisch: Service Data Point), folgendes umfasst: eine Datenbank von zu verwaltenden Teilnehmern, eine Aufzeichnung der Datenbank für einen einzelnen Teilnehmern, die mindestens eine Teilnehmeridentifizierung und andere den Teilnehmer betreffende Teilnehmerdaten enthält, und die Daten der Datenbank, die für eine Echtzeitsteuerung der Anrufe der Benutzer benutzbar sind, nachdem der Diensteinschaltpunkt SSP einen von dem verwalteten Teilnehmer aufgebauten neuen Anruf in das intelligente Netzwerk geleitet hat, wobei die von dem Benutzer eingewählte Nummer in eine Nummer des gewünschten Nummernraums umgewandelt wird und der Anruf zu einer von dem betroffenen Raum definierten Nummer geleitet wird.

6. Ein Verfahren nach Anspruch 5, **dadurch gekennzeichnet, dass** eine Verwaltungslogik der Teilnehmerdaten in dem Dienststeuerungspunkt SCP unmittelbar in der Datenbank ausgebildet wird, von der Telefonvermittlungsstelle erzeugte Berechnungsimpulse während des Anrufs in das intelligente Netzwerk weitergeleitet werden in einer Weise, die von einer von einer Dienststeuerungsfunktion SCF gesendeten Überwachungsanfrage definiert wird, eine Gebühr für den Anruf in dem intelligenten Netzwerk während des Anrufs auf der Grundlage der Berechnungsimpulse und der von dem Kontrollpunkt SCP bereit gestellten Anrufgebühreninformation berechnet wird, wobei die aktuelle Gebühr für den Anruf in Echtzeit bekannt ist.

7. Ein Verfahren nach einem der Ansprüche 1 bis 6, **dadurch gekennzeichnet, dass** nachdem der Benutzer auf den bestimmten vordefinierten Nummernraum zugegriffen hat, eine in dem gewünschten Nummernraum in Betrieb befindliche Nummer von dem Telefon des Benutzers aus ausgewählt wird, zu welcher Nummer unter der Steuerung des intelligenten Netzwerks ein Präfix hinzugefügt wird, um den Zugriff auf den Nummernraum zu ermöglichen, den Anruf in eine durch den in dem intelligenten Netzwerk hinzugefügten Präfix und die Nummer offenbarte Subskription zu leiten.

8. Ein Verfahren nach einem der Ansprüche 1 bis 6, **dadurch gekennzeichnet, dass** nachdem der Benutzer auf den bestimmten vordefinierten Nummernraum zugegriffen hat, eine in dem gewünschten Nummernraum in Betrieb befindliche Nummer von dem Telefon des Benutzers aus ausgewählt wird, von welcher Nummer unter der Steuerung des intelligenten Netzwerks ein Präfix entfernt wird, um den Zugang in den Nummernraum zu ermöglichen, und ein Präfix darin entweder hinzugefügt oder nicht hinzugefügt wird, um den Anruf in eine durch den in dem intelligenten Netzwerk hinzugefügten Präfix und/oder die Nummer offenbarte Subskription zu leiten.

9. Ein intelligentes Netzwerksystem zum Leiten eines Telefonanrufs, wobei das System umfasst:
Mittel zum Verbinden eines von einer Durchlaufvermittlungsstelle zu dem intelligenten Netzwerksystem geleiteten Anrufs, wobei das Leiten des Anrufs zu dem intelligenten Netzwerksystem **dadurch** angekündigt wird, dass der Durchlaufvermittlungsstelle eine vorbestimmte Dienstnummer auf einem Endgerät angezeigt wird,
Mittel zum Empfangen einer Identifizierung und eines die Benutzung eines Diensts des intelligenten Netzwerks berechtigenden Kennworts aus dem Endgerät, wobei ein Benutzer des Endgeräts einen Gegenstand mit einer Abschaboberfläche (20) besitzt, wie etwa eine Guthaben- bzw. Prepaidkarte, so dass die Identifizierung von der Unterseite der Abschaboberfläche her sichtbar abgeschabt wird, und wobei die Mittel dazu ausgebildet sind, eine Ankündigung der Identifizierung und des Kennworts aus dem Endgerät anzuweisen,
**dadurch gekennzeichnet, dass** das intelligente Netzwerksystem ferner umfasst:
Mittel (11, 12, 13) zum Definieren von mindestens einem Nummernraum und zum Zuweisen der vordefinierten Dienstnummer an einen bestimmten vordefinierten Nummernraum, so dass der Benutzer zu dem mit der vordefinierten Dienstnummer zugewiesenen, vordefinierten Nummernraum Zugriff hat,
Mittel zum Empfangen aus dem Endgerät einer in dem vordefinierten Nummernraum in Betrieb befindlichen Nummer, wobei die Nummer durch den Benutzer mittels des Endgeräts ausgewählt wird,
Mittel zum Umwandeln der Nummer, zum Erzeugen einer umgewandelten Nummer, so dass ein Zutritt zu dem vordefinierten Nummernraum ermöglicht wird, wonach die umgewandelte Nummer benutzt wird, um den Anruf zu der in dem vordefinierten Nummernraum in Betrieb befindlichen Nummer zu leiten.

10. Ein intelligentes Netzwerksystem nach Anspruch 9, **dadurch gekennzeichnet, dass** der Benutzer die vordefinierte Dienstnummer mittels einer Guthabenanrufkarte empfängt.

## Revendications

1. Procédé destiné à effectuer un appel téléphonique par un terminal, dans lequel
un utilisateur annonce un numéro de service prédéfini à un central ;
le numéro de service annoncé est identifié par le central et l'appel est connecté à un réseau intelligent ;
l'utilisateur possède un élément avec une surface à gratter tel qu'une carte prépayée, par exemple, si bien que l'identification donnant droit à utiliser le service est dégagée au-dessous de la surface à gratter, après quoi ladite identification est annoncée au réseau intelligent conformément à des instructions données par le réseau intelligent ;
après quoi le droit d'utilisation est vérifié sur le réseau intelligent ;
**caractérisé en ce que**
l'utilisateur obtient un accès à un certain espace de numérotation prédéfini en annonçant le numéro de service prédéfini au central ;
un numéro de téléphone fonctionnant dans l'espace de numérotation prédéfini est sélectionné par l'utilisateur ;
ledit numéro de téléphone sélectionné est converti sous le contrôle du réseau intelligent afin de donner accès à l'espace de numérotation prédéfini ;
l'appel est routé sur le réseau intelligent vers le numéro de téléphone demandé d'une manière indiquée par le numéro converti.

2. Procédé selon la revendication 1, **caractérisé en ce que** l'espace de numérotation correspond à une zone délimitée par un pays ou une zone de localisation.

3. Procédé selon la revendication 1, **caractérisé en ce que** l'espace de numérotation comprend un ensemble de numéros de services.

4. Procédé selon l'une quelconque des revendications 1 à 3, **caractérisé en ce qu'**une zone de destination est sélectionnée, de préférence par exemple une zone de localisation, après quoi le fonctionnement au sein de la zone de localisation est similaire au fonctionnement d'un abonné dans cette zone de localisation.

5. Procédé selon la revendication 1 pour la gestion des informations d'abonnés dans un réseau téléphonique ayant un central téléphonique du réseau auquel est connecté un point de commutation de services, SSP pour « *Service Switching Point* », du réseau intelligent, le point SSP fournissant un accès, à partir du réseau téléphonique, aux services proposés par un point de commande de services, SCP pour « *Service Control Point »* du réseau intelligent, dans lequel un point de données de service, SDP pour « *Service Data Point »,* lié au point de commande de services SCP comprend une base de données des abonnés à gérer, un enregistrement individuel d'abonné dans la base de données comprenant au moins une identification de l'abonné et d'autres données d'abonné qui concernent l'abonné, et les données de la base de données pouvant être utilisées pour une commande en temps réel des appels de l'utilisateur après que le point de commutation de services SSP a acheminé un nouvel appel effectué par l'abonné géré vers le réseau intelligent, dans lequel le numéro composé par l'utilisateur est converti en un numéro de l'espace de numérotation souhaité et l'appel est routé vers un numéro défini par ledit espace concerné.

6. Procédé selon la revendication 5, **caractérisé en ce qu'**une logique de gestion des données d'abonnés, dans le point de commande de services SCP, est constituée immédiatement dans la base de données, **en ce que** les impulsions de calcul produites par le central téléphonique sont acheminées pendant l'appel sur le réseau intelligent d'une manière définie dans une demande de surveillance envoyée par une fonction de commande de services, SCF pour « *Service Control Function* », et **en ce qu'**une taxation pour l'appel est calculée sur le réseau intelligent pendant l'appel, sur la base des impulsions de calcul et des informations de taxation de l'appel fournies par le point de commande SCP, si bien que la taxation instantanée de l'appel est connue en temps réel.

7. Procédé selon l'une quelconque des revendications 1 à 6, **caractérisé en ce que**, après que l'utilisateur a accédé audit certain espace de numérotation prédéfini, un numéro fonctionnant dans l'espace de numérotation souhaité est sélectionné depuis le téléphone de l'utilisateur, auquel numéro un préfixe est ajouté sous le contrôle du réseau intelligent afin de permettre l'accès à l'espace de numérotation et de router l'appel vers un abonnement indiqué par le préfixe ajouté sur le réseau intelligent et par le numéro.

8. Procédé selon l'une quelconque des revendications 1 à 6, **caractérisé en ce que**, après que l'utilisateur a accédé audit certain espace de numérotation prédéfini, un numéro fonctionnant dans l'espace de numérotation souhaité est sélectionné depuis le téléphone de l'utilisateur, auquel numéro un préfixe est retiré sous le contrôle du réseau intelligent afin de permettre l'accès à l'espace de numérotation et un préfixe lui est soit ajouté, soit pas ajouté, afin de router l'appel vers un abonnement indiqué par le préfixe ajouté sur le réseau intelligent et/ou par le numéro.

9. Système de réseau intelligent pour router un appel téléphonique, le système comprenant :
un moyen de connexion à un appel routé vers le système de réseau intelligent à partir d'un central, le routage de l'appel vers le système de réseau intelligent étant indiqué en annonçant un numéro de service prédéfini vers le central à partir d'un terminal ;
un moyen de réception d'une identification et d'un mot de passe donnant droit à l'utilisation d'un service de réseau intelligent à partir du terminal, l'utilisateur du terminal possédant un élément tel qu'une carte prépayée, qui comporte une surface à gratter (20), si bien que l'identification est dégagée au-dessous de la surface à gratter, et ledit moyen étant conçu pour fournir des instructions sur l'annonce de ladite identification et dudit mot de passe à partir du terminal,
**caractérisé en ce que** le système de réseau intelligent comprend en outre :
un moyen (11, 12, 13) destiné à définir au moins un espace de numérotation et à associer le numéro de service prédéfini à un certain espace de numérotation prédéfini, si bien que l'utilisateur a accès à l'espace de numérotation prédéfini associé au numéro de service prédéfini;
un moyen de réception à partir du terminal d'un numéro fonctionnant dans ledit espace de numérotation prédéfini, le numéro étant sélectionné par l'utilisateur à l'aide du terminal ;
un moyen de conversion du numéro, destiné à produire un numéro converti tel que l'accès à l'espace de numérotation prédéfini soit validé, après quoi le numéro converti est utilisé pour router l'appel vers le numéro fonctionnant dans ledit espace de numérotation prédéfini.

10. Système de réseau intelligent selon la revendication 9, **caractérisé en ce que** l'utilisateur reçoit le numéro de service prédéfini sous la forme d'une carte d'appel prépayée.
